# EUROPÄISCHE PATENTSCHRIFT

(11) **EP 0 728 279 B1**
(45) Veröffentlichungstag und Bekanntmachung des Hinweises auf die Patenterteilung: **19.04.2000**
(21) Anmeldenummer: 95926838.4
(22) Anmeldetag: 01.08.1995
(51) Int. Cl.: F23D 14/74, F23M 9/06, F24H 1/44

(54) **VERFAHREN ZUM BETREIBEN EINES HEIZGERÄTES SOWIE HEIZGERÄT ZUR DURCHFÜHRUNG DES VERFAHRENS**
METHOD OF OPERATING A HEATER, AND HEATER FOR CARRYING OUT THE METHOD
PROCEDE D'UTILISATION D'UN APPAREIL DE CHAUFFAGE ET APPAREIL DE CHAUFFAGE CORRESPONDANT

(30) Priorität: 09.08.1994 DE 4428097
(43) Veröffentlichungstag der Anmeldung: 28.08.1996
(73) Patentinhaber: ROBERT BOSCH GMBH, 70442 Stuttgart (DE)
(72) Erfinder: SCHWARZ, Hans-Jochen, D-73614 Schorndorf (DE); DANNER, Klaus, D-66440 Blieskastel (DE); ZIMMERMANN, Hans-Werner, D-67663 Kaiserslautern (DE); KLINK, Hans-Joachim, D-73235 Weilheim (DE)
(86) Internationale Anmeldenummer: DE9501007
(87) Internationale Veröffentlichungsnummer: WO9605470

(56) Entgegenhaltungen:
- EP-A- 0 599 395
- FR-A- 1 522 879
- GB-A- 1 401 216
- US-A- 1 691 607
- PATENT ABSTRACTS OF JAPAN vol. 013 no. 060 (M-796) ,10.Februar 1989 & JP,A,63 263312 (MATSUSHITA ELECTRIC IND CO LTD) 31.Oktober 1988,
- PATENT ABSTRACTS OF JAPAN vol. 009 no. 158 (M-393) ,3.Juli 1985 & JP,A,60 033412 (OSAKA GAS KK) 20.Februar 1985,

## Beschreibung

### Stand der Technik

Die Erfindung betrifft ein Verfahren zum Betreiben eines Heizgerätes nach der Gattung des Hauptanspruchs sowie ein Heizgerät zur Durchführung des Verfahrens. Es sind bereits Heizgeräte bekannt, die zur NOₓ-Reduzierung die Flamme kühlende Mittel aufweisen. Derartig gängige Mittel oder Maßnahmen sind beispielsweise ein oder mehrere in die Flamme eingebrachte Flammenkühlstäbe, Brenner mit wassergekühlter Brennerplatte, Infrarotstrahlungsbrenner mit glühenden Brennerplatten und ähnliches. Diesen Mitteln ist gemeinsam, daß der Flamme Energie entzogen wird und die Flammentemperatur dadurch sinkt. Mit sinkender Flammentemperatur nimmt auch die NOₓ-Bildung ab. Nachteilig an derartigen Maßnahmen ist, daß die Effektivität in der NOₓ-Reduzierung mit steigender Leistung abnimmt und auch eine Modulation über einen größeren Leistungsbereich nur unbefriedigend gewährleistet ist.

In der EP 0599 395 A1 wird ein gattungsgemäßes Verfahren bzw. eine gattungsgemäße Heizvorrichtung beschrieben, bei der ein Gasstrom zur Erzeugung von Turbulenzen mit großer Geschwindigkeit in die Brennkammer eingedüst wird. Mit Hilfe von Führungsmitteln wird der Gasstrahl auf Hindernisse, z.B. in Form einer Wand, gelenkt und damit abgebremst, wobei ein rezirkulierender Anteil des Gasstromes den an den Austrittsöffnungen austretenden Gasstrahl entzündet.

### Vorteile der Erfindung

Das erfindungsgemäße Verfahren mit den Merkmalen des Hauptanspruchs hat den Vorteil, daß einerseits eine stabile Flamme aufgrund gut beherrschbarer Strömungsverhältnisse und andererseits ein optimaler Flammenkühlungsprozeß gewährleistet wird. Die Brennkammerwand wirkt dabei einerseits stabilisierend auf die Flamme und entzieht der Flamme großflächig Energie, wodurch ein Absinken der Flammentemperatur wirkungsvoll erreicht ist. Aufgrund der Großflächigkeit dieses Flammenkühlmittels ist sowohl für große Brennerleistungen als auch für große einstellbare Brennerleistungsbereiche eine optimale NOₓ-Reduzierung gewährleistet, da bei steigender Austrittsgeschwindigkeit die Flamme intensiver mit der Brennkammerwand in Kontakt tritt.

Als vorteilhaften Nebeneffekt wird aufgrund der hohen Austrittsgeschwindigkeit eine hohe spezifische Flächenleistung des Brenners erreicht. Daraus ergibt sich ein kompakter Aufbau und eine, bezogen auf die mögliche maximale Leistung verhältnismäßig kleine Größe der äußeren Abmessungen des Heizgerätes.

Durch die in Anspruch 2 aufgeführten Merkmale sind weitere vorteilhafte Ausgestaltungen des Verfahrens nach dem Hauptanspruch möglich.

Zum Betreiben eines Heizgerätes nach dem Verfahren ist es vorteilhaft, wenn beim Start des Heizgerätes die Ausströmgeschwindigkeit ungefähr gleich der oder etwas größer als die Flammgeschwindigkeit ist, so daß der Brenner sicher gezündet werden kann und erst nach erfolgreicher Zündung der Flamme die Ausströmgeschwindigkeit erhöht wird.

Die Ausströmgeschwindigkeit des Brennstoff/Luftgemisches kann bevorzugt zwischen 0,5 und 15 m/sec liegen, wobei ein äußerst stabiler und NOₓ-armer Betriebszustand mit Ausströmgeschwindigkeiten zwischen 1 und 6 m/sec erreicht wurde.

Ein erfindungsgemäßes Heizgerät weist einen zylindrischen Brennerkopf auf, der von der Brennkammer konzentrisch umgeben ist, wobei die Brennkammerwand gekühlt ist. Durch diesen erfindungsgemäßen Aufbau findet eine effektive Umsetzung des erfindungsgemäßen Verfahrens in einem Heizgerät statt, das zudem kompakt und platzsparend aufgebaut ist. Die Maßnahme der gekühlten Brennkammerwand ist für sich zwar bekannt, jedoch erst in Verbindung mit der an die Brennkammerwand heranführbaren Flammen und dem direkten Kontakt von Flamme und Brennkammerwand ergibt sich eine äußerst wirkungsvolle NOₓ - Reduzierung bis in sehr große Leistungsbereiche.

Bei einer vorteilhaften Ausführung ist der Brennerkopf aus kreisringförmigen Scheiben zusammengesetzt, zwischen denen die Ausströmöffnungen ebenfalls kreisringförmig ausgebildet sind. Das stirnseitige Ende des Brennerkopfes ist mindestens annähernd senkrecht zur Achse des Brennerkopfes. Dadurch ergibt sich ein Aufprallen der vom Gebläse geförderten Gemischströmung an der Stirnseite, was zu einem lokalen Überdruck führt und somit das Gemisch entsprechend stärker durch die Ausströmöffnungen preßt. Durch diese Maßnahme kann die axiale Ausdehnung des Brennerkopfes klein gehalten werden.

Ist der Abstand zwischen dem stirnseitigen Ende des Brennerkopfes und der dem stirnseitigen Ende gegenüberliegenden Brennkammerwand klein, bezogen auf die Ausdehnung des stirnseitigen Endes bei radialer Ausströmrichtung des Brennstoff-Luftgemisches, wird in diesem Bereich ein Unterdruck erzeugt, der bewirkt, daß die Flammen an den oberen Bereich der Brennkammerwand herangezogen werden.

### Schließt sich an die Verwirbelungszone eine Nachreaktionszone an, die sich vorteilhaft durch einen die Brennkammer begrenzenden Wärmeübertrager begrenzen läßt, so ist ein vollständiges Verbrennen des Brennstoff-Luftgemisches unter niedrigerer Temperatur möglich, wodurch der CO-Gehalt verringert wird, ohne daß dadurch der NOₓ-Gehalt des Abgases steigt.

### Zeichnung

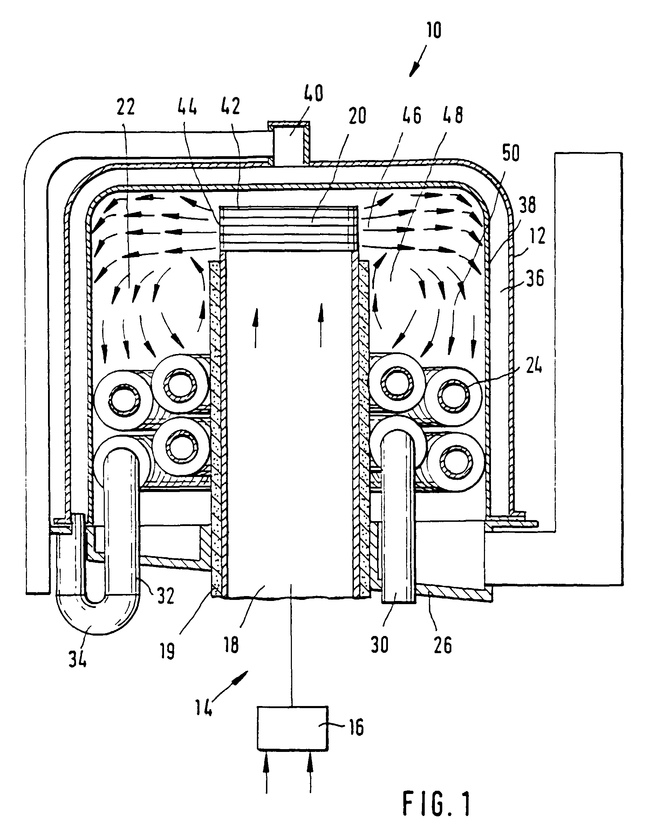

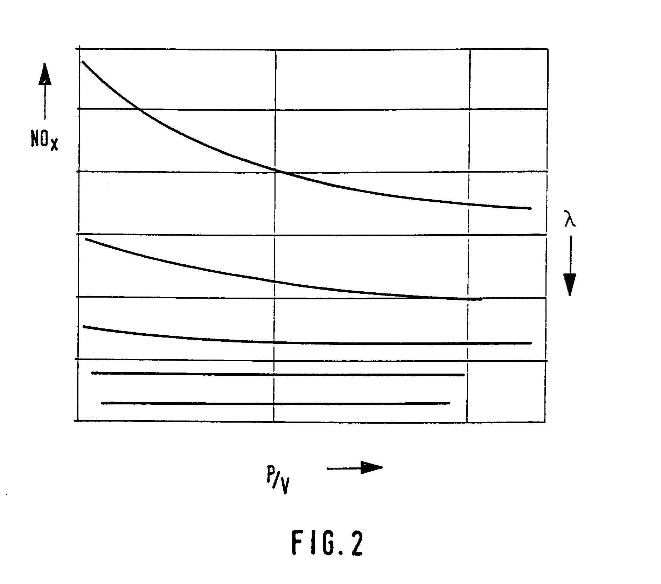

In der Zeichnung ist ein erfindungsgemäßes Heizgerät dargestellt und in der nachfolgenden Beschreibung unter Angabe weiterer Vorteile näher erläutert. Es zeigen Figur 1 schematisch ein Heizgerät im Schnitt und Figur 2 ein Diagramm der NOₓ-Emission in Abhängigkeit von der spezifischen Volumenbelastung und der Luftzahl Lambda.

### Beschreibung

Figur 1 zeigt einen Teil eines Heizgerätes 10 mit einem in einer Brennkammer 12 angeordneten Brenner 14 mit einem Gebläse 16, einem von einem insbesondere keramischen Isolationskörper 19 umgebenen Brennerrohr 18 und einem Brennerkopf 20. Das Brennerrohr 18 ist zylindrisch ausgebildet und konzentrisch von der ebenfalls zylindrisch ausgebildeten Brennkammer 12 umgeben. Zwischen Brennerrohr 18 und Brennkammer 12 ist ein Brennraum 22 gebildet, der von einem ringförmig um das Brennerrohr 18 gewundenen wendelförmigen Wärmeübertrager 24 abgeschlossen ist.

Die Brennkammer 12 ist topfförmig ausgebildet und mit ihrem offenen Ende teilweise über den Brenner 12 und den Wärmeübertrager 24 gestülpt. Die untenliegende Öffnung ist durch ein kreisringförmiges Luftleitblech 26 abgeschlossen, das auf eine Seite schräg abfällt und das an dieser Seite einen Abgasabzug 28 aufnimmt.

Der Wärmeübertrager 24 weist ein Einlaßrohr 30 und ein Auslaßrohr 32 auf. Über einen Krümmer 34 ist das Auslaßrohr 32 mit einem Raum 36 verbunden, der sich entlang der Brennkammer 12 erstreckt. Dadurch ist die den Brennraum 22 umgebende Brennkammerwand 38 auf ihrer dem Brennraum 22 abgewandten Seite von dem zu erwärmenden Fluid umspült. Am oberen Ende weist der Raum 36 zentral einen Auslaß 40 auf.

Beim Betrieb wird dem Heizgerät durch das Gebläse 16 ein homogen vermischtes Brennstoff-Luftgemisch zugeführt, das durch das Brennerrohr 18 in den Brennerkopf 20 gelangt. Der Brennerkopf 20 weist an seinem stirnseitigen Ende eine senkrecht zur Achse des Brennerkopfs 20 stehende Prallplatte 42 auf, gegen die das Brennstoff-Luftgemisch strömt, wodurch ein Staudruck entsteht. Ferner weist der Brennerkopf 20 kreisförmige, radial angeordnete Ausströmöffnungen 44 auf, durch die, durch den Staudruck verstärkt, das Brennstoff-Luftgemisch in den Brennraum 22 strömt.

Beim Zünden des Heizgerätes 10 wird mittels des Gebläses 16 das Brennstoff-Luftgemisch derart zugeführt, daß die Austrittsgeschwindigkeit aus dem Brennerkopf ungefähr gleich der oder etwas größer als die Flammengeschwindigkeit des Brennstoff-Luftgemisches ist. Ein Methan-Luftgemisch beispielsweise weist eine Flammgeschwindigkeit von ca. 0,4 m/sec auf. Die Flamme wird durch eine nicht dargestellte Zündvorrichtung gezündet und sitzt mit ihrem Flammenfuß in bekannter Weise auf dem Brennerkopf auf.

Zum Betreiben des Heizgerätes 10 wird durch das Gebläse 16 die Ausströmgeschwindigkeit des Brennstoff-Luftgemisches erhöht. Die Flamme wird dadurch größer und hebt mit ihrem Flammenfuß vom Brennerkopf 20 ab. Durch die den Austrittsöffnungen 44 gegenüberliegende Brennkammerwand 38 wird die Gemischströmung abgebremst und in den Brennraum 22 hinein umgelenkt. Auf diese Weise ist verhindert, daß sich die Flamme gänzlich vom Brennerkopf 20 löst und "ausgeblasen" wird. Die Flamme erstreckt sich in diesem Betriebszustand losgelöst vom Brennerkopf 20 bis nahe an die Brennkammerwand 44.

Durch die ausgedehnte Flamme einerseits und die großflächige Kühlung der Flamme an der Brennkammerwand 38 andererseits wird eine erhebliche NOₓ-Reduzierung gegenüber herkömmlichen Heizgeräten erzielt.

Die erhöhte Ausströmgeschwindigkeit des Brennstoff-Luftgemisches bewirkt, daß sich in der Nähe des Brennerkopfes 20 eine Unterdruckzone 46 ausbildet, so daß ganz oder teilweise verbranntes Brennstoff-Luftgemisch aus dem Brennraum 22 wieder angesaugt wird. Hieraus ergeben sich zwei so nicht vorhersehbare Effekte:
1. In Kombination mit der Umlenkung der Gasströmung an der Brennkammerwand 38 und dem Ansaugen durch die Unterdruckzone 46 wird eine Wirbelzone 48 ausgebildet, in der eine turbulente Strömung vorherrscht. Dadurch wird das Gasgemenge gleichmäßig und homogen vermischt, so daß eine gleichmäßige Temperaturverteilung in diesem Bereich erreicht wird. Heiße Stellen, die zu erhöhtem NOₓ führen, sind vermieden.
2. Das direkt aus dem Brennerkopf ausströmende Brennstoff-Luftgemisch wird durch die aus dem Brennraum 22 zugeführte Gasmenge erwärmt, wodurch die Flammgeschwindigkeit steigt, so daß auch die Austrittsgeschwindigkeit des Brennstoff-Luftgemisches aus dem Brennerkopf 20 erhöht werden kann. Auf diese Weise ist es möglich, die spezifische Volumenleistung des Heizgerätes zu steigern. Außerdem wird bewirkt, daß sich die Flamme stärker an die Brennkammerwand 38 anlehnt und dadurch großflächiger gekühlt und die NOₓ-Emission reduziert wird.

In Strömungsrichtung gesehen hinter der Unterdruck- und Verwirbelungszone, oberhalb des Wärmeübertragers 24 bildet sich eine Nachreaktionszone 50 aus, in der eine niedrigere Temperatur als in der Unterdruck- und Verwirbelungszone vorherrscht, so daß kein NOₓ gebildet, aber das noch vorhandene CO zu CO₂ verbrannt wird.

Die Austrittsgeschwindigkeit des Brennstoff-Luftgemisches aus dem Brennerkopf 20 kann zwischen 0,5 und ca. 15 m/sec variieren, wobei insbesondere bei hohen Ausströmgeschwindigkeiten Instabilitäten auftreten können, so daß Ausströmgeschwindigkeiten zwischen 1 und 6 m/sec zu bevorzugen sind. Der Abstand der Oberfläche des Brennerkopfes zur Brennkammerwand 38 variiert in diesen Fällen zwischen 20 und 200 mm, wobei auch hier für den bevorzugten Bereich der Austrittsgeschwindigkeit Abstände zwischen 40 und 120 mm vorteilhaft sind.

Die Länge der Brennkammer ist in Abhängigkeit vom Abstand des Brennerkopfes 20 zur Brennkammerwand 38 zu wählen. Hier ist zu beachten, daß das zugeführte Brennstoff-Luftgemisch vollständig in der Brennkammer 22 verbrannt werden muß und daß deshalb bei vorgegebenen Geschwindigkeiten die Länge des im Mittel zurückgelegten Weges des Brennstoff-Luftgemisches eine bestimmte Größe aufweisen muß. Wird aus strömungs- oder verbrennungstechnischen Gründen der Abstand zwischen Brennerkopf 20 und Brennkammerwand 38 kürzer gewählt, muß die Länge der Brennkammer 22 entsprechend vergrößert werden.

Zur Erhöhung der Kühlwirkung der Brennkammer wird der Brennerkopf 20 mit seiner Prallplatte 42 sehr dicht an die der Prallplatte 42 gegenüberliegende Brennkammerwand 38 angeordnet. Durch die erhöhte Austrittsgeschwindigkeit aus dem Brennerkopf 20 wird im Raum zwischen der Prallplatte 42 und der Brennkammerwand 38 ein erheblicher Unterdruck erzeugt, wodurch das ausströmende Brennstoff-Luftgemisch in Richtung der oberen Brennkammerwand gelenkt wird, so daß die Flamme stärker der kühlenden Wirkung der Brennkammerwand 38 ausgesetzt ist. Der Brennerkopf 20 ist dazu aus kreisringförmigen Scheiben zusammengesetzt, zwischen denen die Ausströmöffnungen 42 ebenfalls kreisringförmig ausgebildet sind. Auf diese Weise ist ein kostengünstiger Brennerkopf 20 mit symmetrisch austretendem Brennstoff-Luftgemisch aufgebaut.

Das Heizgerät 10 zeichnet sich auch dadurch aus, daß, wie Figur 2 zeigt, die NOₓ-Emission mit steigender Leistung bei vorgegebenem Volumen sinkt. Das heißt, bei einem vorgegebenen Heizgerät 10 sinkt die Emission von NOₓ, wenn die Austrittsgeschwindigkeit erhöht wird. Eine weitere Verminderung der NOₓ-Reduktion kann durch Erhöhen der Luftzahl λ erreicht werden.

## Patentansprüche

1. Verfahren zum Betreiben eines Heizgerätes mit einem in einer Brennkammer (12) angeordneten Brennerkopf (20) mit Ausströmöffnungen (44) für ein Brennstoff-Luftgemisch und einer Brennkammerwand (38) gegen die das Brennstoff-Luftgemisch strömt, wobei während des Betriebs die Ausströmgeschwindigkeit des Brennstoff-Luftgemisches aus dem Brennerkopf (20) größer gewählt wird als die Flammgeschwindigkeit des Brennnstoff-Luftgemisches, dadurch gekennzeichnet, daß die Austrittsgeschwindigkeit des durch ein Gebläse (16) geförderten Brenngas-Luftgemisches so groß gewählt wird, daß das noch nicht entflammte Brennstoff-Luftgemisch vor der Brennkammerwand (38) mindestens bis auf die Flammgeschwindigkeit abgebremst wird und sich eine Flammmenfront in der Nähe der Brennkammerwand (38) ausbildet.

2. Verfahren nach Anspruch 1, dadurch gekennzeichnet, daß beim Start des Heizgerätes (10) die Ausströmgeschwindigkeit ungefähr gleich der Flammgeschwindigkeit ist und nach erfolgreicher Zündung der Flamme die Auströmgeschwindigkeit erhöht wird.

3. Heizgerät zur Durchführung des Verfahrens nach einem der vorhergehenden Ansprüche, mit einem in einer Brennkammer (12) angeordneten Brennerkopf (20), der Ausströmöffnungen (44) für ein Brennstoff-Luftgemisch aufweist und einer Brennkammerwand (38), die den Ausströmöffnungen (44) des Brennerkopfes (20) gegenüberliegt und gegen die das Brennstoff-Luftgemisch strömt und abgebremst wird, wobei die Brennkammerwand (38) gekühlt ist, dadurch gekennzeichnet, daß der Brennerkopf (20) zylindrisch ist und von der Brennkammer (12) konzentrisch umgeben ist.

4. Heizgerät nach Anspruch 3, dadurch gekennzeichnet, daß der Abstand der Oberfläche des Brennerkopfes (20) zur Brennkammerwand (38) zwischen 20 und 200 mm, insbesondere zwischen 40 und 120 mm liegt.

5. Heizgerät nach einem der Ansprüche 3 oder 4, dadurch gekennzeichnet, daß der Brennerkopf (20) aus kreisringförmigen Scheiben zusammengesetzt ist, zwischen denen die Auströmöffnungen ebenfalls kreisringförmig ausgebildet sind.

6. Heizgerät nach einem der Ansprüche 3 bis 5, dadurch gekennzeichnet, daß das stirnseitige Ende des Brennerkopfes (20) mindestens annähernd senkrecht zur Achse des Brennerkopfes (20) ist.

7. Heizgerät nach einem der Ansprüche 3 bis 6, dadurch gekennzeichnet, daß der Abstand zwischen dem stirnseitigen Ende des Brennerkopfes (20) und der dem stirnseitigen Ende gegenüberliegenden Brennkammerwand klein ist bezogen auf die Ausdehnung des stirnseitigen Endes und daß die Ausströmung des Brennstoff-Luftgemisches radial erfolgt.

8. Heizgerät nach einem der Ansprüche 3 bis 7,
gekennzeichnet durch einen die Brennkammer begrenzenden Wärmeüberträger (24), vor dem sich in Strömungsrichtung eine Nachreaktionszone (50) mit geringerer Verwirbelung ausbildet.

## Claims

1. Method for operating a heating appliance with a burner head (20) arranged in a combustion chamber (12) and having outflow orifices (44) for a fuel/air mixture and a combustion chamber wall (38), against which the fuel/air mixture flows, during operation the outflow velocity of the fuel/air mixture from the burner head (20) being selected higher than the flame velocity of the fuel/air mixture, characterized in that the outflow velocity of the fuel-gas/air mixture conveyed by a blower (16) is selected so high that the not yet inflamed fuel/air mixture is decelerated, upstream of the combustion chamber wall (38), at least to the flame velocity, and a flame front is formed in the vicinity of the combustion chamber wall (38).

2. Method according to Claim 1, characterized in that, when the heating appliance (10) is started, the outflow velocity is approximately equal to the flame velocity and, after the flame is successfully ignited, the outflow velocity is increased.

3. Heating appliance for carrying out the method according to one of the preceding claims, with a burner head (20) which is arranged in a combustion chamber (12) and has outflow orifices (44) for the fuel/air mixture, and with a combustion chamber wall (38) which is located opposite the outflow orifices (44) of the burner head (20) and against which the fuel/air mixture flows and is decelerated, the combustion chamber wall (38) being cooled, characterized in that the burner head (20) is cylindrical and is concentrically surrounded by the combustion chamber (12).

4. Heating appliance according to Claim 3, characterized in that the distance between the surface of the burner head (20) and the combustion chamber wall (38) is between 20 and 200 mm, in particular between 40 and 120 mm.

5. Heating appliance according to one of Claims 3 or 4, characterized in that the burner head (20) is composed of annular discs, between which the outflow orifices are formed likewise annularly.

6. Heating appliance according to one of Claims 3 to 5, characterized in that the end face of the burner head (20) is at least approximately perpendicular to the axis of the burner head (20).

7. Heating appliance according to one of Claims 3 to 6, characterized in that the distance between the end face of the burner head (20) and the combustion chamber wall located opposite the end face is small, as compared with the extent of the end face, and in that the outflow of the fuel/air mixture takes place radially.

8. Heating appliance according to one of Claims 3 to 7, characterized by a heat exchanger (24) which delimits the combustion chamber and upstream of which, in the direction of flow, a post-reaction zone (50) of lower turbulence is formed.

## Revendications

1. Procédé de mise en oeuvre d'un appareil de chauffage comprenant une tête de brûleur (20) logée dans une chambre de combustion (12), la tête étant munie d'orifices de sortie (44) pour un mélange carburant-air et une paroi de chambre de combustion (38) vers laquelle s'écoule le mélange carburant-air,
pendant le fonctionnement, on fixe la vitesse d'écoulement du mélange carburant-air sortant de la tête de brûleur (20), plus grande que la vitesse de flamme du mélange carburant-air,
caractérisé en ce que
la vitesse de sortie du mélange carburant-air fourni par une machine soufflante (16) est choisie pour que le mélange carburant-air non encore brûlé avant la paroi de la chambre de combustion (38) soit freiné au moins jusqu'à la vitesse de flamme et que le front de flamme se développe à proximité de la paroi (38) de la chambre de combustion.

2. Procédé selon la revendication 1,
caractérisé en ce qu' au démarrage de l'appareil de chauffage (10), on a une vitesse de sortie sensiblement égale à la vitesse de flamme et une fois l'allumage de la flamme réussi, on augmente la vitesse de sortie.

3. Appareil de chauffage pour la mise en oeuvre du procédé selon l'une des revendications précédentes comprenant :
- une tête de brûleur (20) logée dans une chambre de combustion (12),
- la tête de brûleur ayant des orifices de sortie (44) pour un mélange carburant-air et,
- une paroi de chambre de combustion (38) en regard des orifices de sortie (44) de la tête de brûleur (20) contre laquelle le mélange carburant-air s'écoule et est freiné par cette paroi, qui est ainsi refroidie,
caractérisé en ce que
la tête de brûleur (20) est cylindrique et est entourée de manière concentrique par la chambre de combustion (12).

4. Appareil de chauffage selon la revendication 3,
caractérisé en ce que
la distance entre la surface de la tête de brûleur (20) et la paroi (38) de la chambre de combustion est comprise entre 20 et 200 mm, notamment entre 40 et 120 mm.

5. Appareil de chauffage selon l'une des revendications 3 ou 4,
caractérisé en ce que
la tête de brûleur (20) est composée de disques de forme annulaire entre lesquels sont réalisés des orifices de sortie également de forme annulaire.

6. Appareil de chauffage selon l'une des revendications 3 à 5,
caractérisé en ce que
l'extrémité frontale de la tête de brûleur (20) est au moins sensiblement perpendiculaire à l'axe de la tête de brûleur (20).

7. Appareil de chauffage selon l'une des revendications 3 à 6,
caractérisé en ce que
la distance entre l'extrémité de la face frontale de la tête de brûleur (20) et la paroi de la chambre de brûleur en regard de cette extrémité de la face frontale est petite par rapport à la dimension de l'extrémité frontale et, la sortie du mélange carburant-air se fait radialement.

8. Appareil de chauffage selon l'une des revendications 3 à 7,
caractérisé en ce que
dans la direction de l'écoulement, il s'établit une zone de postréaction (50) avec une turbulence réduite, devant un échangeur de chaleur (24) délimitant la chambre de combustion.
